# FASCICULE DE BREVET EUROPEEN

(11) **EP 0 475 790 B1**
(45) Date de publication et mention de la délivrance du brevet: **06.03.1996**
(21) Numéro de dépôt: 91401844.5
(22) Date de dépôt: 04.07.1991
(51) Int. Cl.: G02B 23/12, G02B 23/10, G02B 23/00, G02B 27/00

(54) **Dispositif optique destiné à l'introduction d'une image collimatée dans le champ visuel d'un observateur et permettant la vision nocturne et casque muni d'au moins un tel dispositif**
Optisches System zur Einspiegelung eines kollimierten Bildes ins Gesichtsfeld eines Beobachters für Nachtsichtanwendung und Helm mit mindestens einem derartigen System
Optical system for introducing a collimated image in the field of view of an observer and for night vision, and helmet comprising the same

(30) Priorité: 27.07.1990 FR 9009610
(43) Date de publication de la demande: 18.03.1992
(73) Titulaire: SEXTANT AVIONIQUE S.A., F-92366 Meudon la Forêt Cédex (FR)
(72) Inventeur: Monnier, Laurent, F-92045 Paris La Défense (FR); Kraus, Jean-Marc, F-92045 Paris La Défense (FR); Perbet, Jean-Noel, F-92045 Paris La Défense (FR)
(74) Mandataire: Courtellemont, Alain

(56) Documents cités:
- EP-A- 0 206 324
- EP-A- 0 381 449
- EP-A- 0 403 342
- FR-A- 2 622 284
- OPTICAL ENGINEERING, vol 23, 1984, pp 331-333; JAMIESON: "Channel interaction in an optical fire control sight"

## Description

La présente invention concerne un dispositif optique pouvant être utilisé en vision diurne et en vision nocturne et permettant d'introduire, en surimpression dans le champ visuel d'un observateur, une image collimatée.

Il est connu, en utilisant un combineur optique, d'introduire, en surimpression dans le champ visuel d'un observateur, une image collimatée qui, par exemple, donne à un pilote des informations relatives aux paramètres de vol de son avion. L'optique combinatoire utilisée à cette fin est placée devant l'oeil de l'observateur et permet à cet observateur de voir le paysage extérieur, généralement par transparence à travers un bloc optique, et de voir l'image collimatée grâce à un trajet optique comportant des réflexions à l'intérieur du bloc optique. Un dispositif optique réalisé de cette façon, lorsqu'il est monté sur un casque, constitue ce qui est appelé un visuel de casque. Il est également connu d'effectuer une observation nocturne avec un visuel de casque comportant une optique d'observation nocturne suivie d'un intensificateur de lumière : l'image donnée par l'intensificateur est combinée à l'image collimatée grâce à une optique combinatoire auxiliaire, du type miroir semi-réfléchissant, avant de parvenir à une optique combinatoire principale placée devant l'oeil du pilote et lui permettant de voir le paysage extérieur par transparence mais aussi l'image collimatée et l'image de l'intensificateur ; un tel dispositif est, par exemple, décrit dans la demande de brevet EP-A-0 206 324.

L'optique combinatoire auxiliaire favorise très fortement la voie optique provenant de l'intensificateur au détriment de la voie optique propre à l'image collimatée. Pour éviter que, en vision diurne, l'image collimatée soit peu visible du fait de l'affaiblissement dû à l'optique combinatoire auxiliaire et du fait de la luminosité de la vue sur le paysage extérieur, les moyens permettant la vision nocturne ne sont montés sur le casque que lorsqu'ils sont utilisés ; il en résulte des montages et des démontages qui rendent très malcommode le passage de la vision diurne à la vision nocturne et vice versa.

La présente invention a pour but d'éviter ou, pour le moins, de réduire ces inconvénients. Ceci est obtenu à partir d'une optique combinatoire auxiliaire telle que, en vision diurne, au moins la plus grande partie de la lumière destinée à donner l'image collimatée atteigne l'optique combinatoire principale, et où l'optique combinatoire auxiliaire s'escamote en vision diurne.

Selon l'invention il est proposé un dispositif optique pour la vision diurne et nocturne présentant une première, une deuxième et une troisième voie optique destinées à aboutir toutes les trois à l'oeil d'un observateur, la première voie comportant en série une optique d'observation nocturne, un intensificateur de lumière, une optique combinatoire auxiliaire, une optique de collimation pour fournir une image collimatée et une optique combinatoire principale, la deuxième voie comportant en série un générateur d'images, l'optique combinatoire auxiliaire, l'optique de collimation et l'optique combinatoire principale, et la troisième voie comportant l'optique combinatoire principale et étant destinée à permettre à un observateur de regarder directement ce qui se trouve dans son champ visuel, caractérisé en ce que l'optique combinatoire auxiliaire est constituée par un miroir escamotable semi-réfléchissant traité pour présenter un coefficient de réflexion nettement supérieur à son coefficient de transmission, ce miroir escamotable, quand il n'est pas escamoté, travaillant en réflexion pour la première voie et en transmission pour la deuxième voie.

Il est à noter que, par un article de T.H. JAMIESON paru dans la revue OPTICAL ENGINEERING Vol. 23, n° 3 de mai-juin 1984 et intitulé "Channel interaction in an optical fire control sight", il est connu de transformer un dispositif d'observation diurne en dispositif d'observation nocturne ; pour cela la voie diurne est interrompue en un endroit qui peut être contourné grâce à un ensemble escamotable comportant quatre miroirs purement réfléchissants, associés à un intensificateur de lumière; un tel dispositif montre que l'utilisation de miroirs escamotables est connue pour choisir entre différentes voies optiques mais ne donne pas l'idée de réaliser un dispositif comme décrit au paragraphe précédent c'est-à-dire, en particulier, un dispositif dans lequel au moyen d'un miroir semi-réfléchissant escamotable il est possible de choisir entre une première plus une deuxième voie optique et seulement la deuxième voie optique, ces deux voies comportant respectivement un intensificateur de lumière et un générateur d'images.

La présente invention sera mieux comprise et d'autres caractéristiques apparaîtront à l'aide de la description ci-après et des figures s'y rapportant qui représentent :
- les figures 1 et 2, deux schémas du dispositif optique selon l'invention,
- la figure 3, un schéma d'un autre dispositif optique,
- les figures 4 à 8, des courbes représentatives de caractéristiques d'éléments du dispositif optique selon la figure 3.

Sur les figures les éléments correspondants sont désignés par les mêmes repères.

Les quelques rappels techniques qui suivent vont permettre, si besoin, de mieux comprendre l'invention.

Les dispositifs optiques, tels par exemple que les visuels de casque, fonctionnent de la façon suivante : les informations à transmettre à l'utilisateur sont produites par un générateur d'images lumineuses, par exemple sur un écran de tube cathodique ou sur un écran matriciel ; l'image ainsi formée est prise en compte par un ensemble optique qui permet à l'utilisateur de voir le paysage extérieur et, en surimpression, l'image qui est, au préalable, collimatée à l'infini de manière qu'elle soit nette quand l'utilisateur regarde et accommode à grande distance.

Les systèmes de vision nocturne comportent en série un premier ensemble optique qui forme une image du paysage extérieur très peu lumineux, un tube intensificateur d'image qui reçoit l'image formée par le premier ensemble optique et en amplifie la luminance, et un second ensemble optique qui reçoit l'image amplifiée en luminance et la collimate à l'infini afin de rendre l'observation de l'image agréable d'un point de vue physiologique, c'est-à-dire en ce qui concerne la convergence et l'accommodation des yeux.

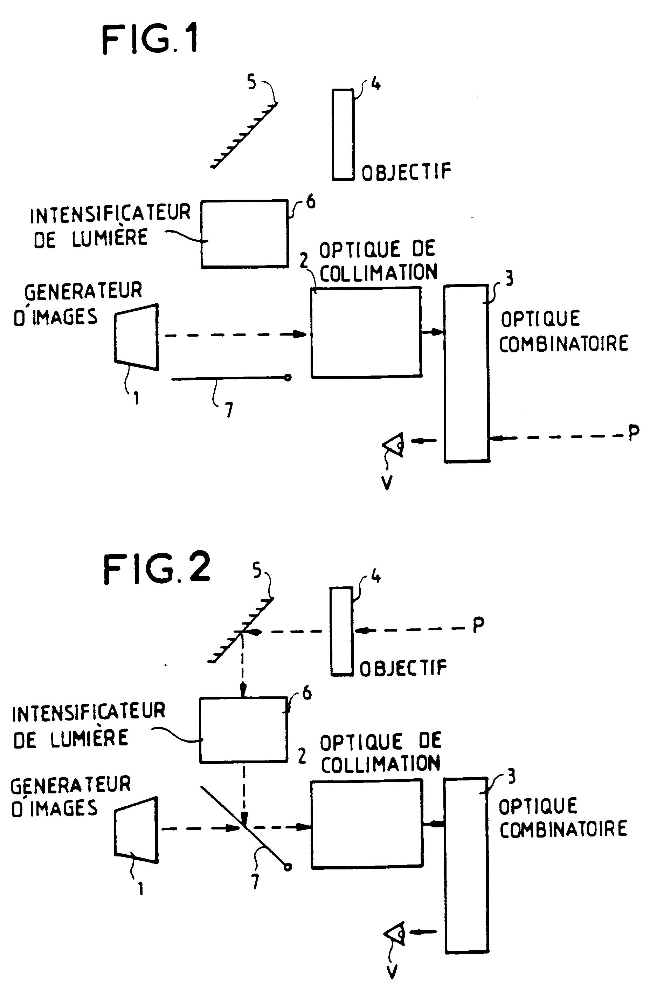

L'image que fournit, dans un visuel de casque, le générateur d'images à l'optique de collimation a à peu près la même taille que les images que fournit, dans des jumelles de vision de nuit, chacun des deux intensificateurs de lumière à l'ensemble optique de sortie auquel il est couplé. Cette similitude de taille facilite la réalisation des dispositifs selon les figures 1 à 3 où la combinaison des images du générateur d'image et du système de vision nocturne s'effectue dès la production de ces images, grâce à une optique combinatoire.

Les figures 1 et 2 représentent un dispositif selon l'invention, respectivement en position d'observation diurne et nocturne. Ce dispositif comporte un générateur d'image, 1, dont les images qu'il produit sont collimatées à l'infini par une optique de collimation 2, pour être transmises à l'oeil, V, d'un observateur par une optique combinatoire, 3, à travers laquelle l'observateur peut également voir directement le paysage extérieur, P, du moins lorsque les conditions d'éclairage le permettent.

Quand les conditions d'éclairage ne permettent plus de voir suffisamment le paysage extérieur directement à travers l'optique combinatoire 3, un miroir semi-réfléchissant escamotable, 7, est intercalé à 45 degrés dans le trajet optique entre le générateur d'images 1 et l'optique de collimation, 2. Ce miroir, quand il est placé en position nocturne, c'est-à-dire comme sur la figure 2, joue un rôle d'optique combinatoire : il laisse passer vers l'optique de collimation 2 les rayons lumineux provenant du générateur d'images 1 et réfléchit vers l'optique de collimation 2 les rayons lumineux provenant d'un ensemble destiné à la vision nocturne. L'ensemble destiné à la vision nocturne comporte une optique d'observation 4, 5 suivie d'un intensificateur de lumière 6 ; l'optique d'observation est constituée d'un objectif 4 et d'un miroir de renvoi 5 qui forment, du paysage extérieur une image sur l'intensificateur de lumière 6 et ce dernier amplifie la luminance de cette image. Les rayons lumineux correspondant à cette image amplifiée sont envoyés en direction du miroir semi-réfléchissant escamotable 7.

En utilisation diurne, c'est-à-dire selon la figure 1, le maximum de flux lumineux est transmis du générateur d'images en direction de l'optique de collimation 2 permettant la collimation et le mélange de l'image provenant du générateur 1 avec la vision que l'observateur a du paysage extérieur P, directement à travers l'optique combinatoire, 3.

Le miroir semi-réfléchissant escamotable 7, dans l'exemple décrit, présente un coefficient de réflexion de 95% et un coefficient de transmission de 5%. Ceci permet, en utilisation nocturne c'est-à-dire selon la figure 2, de favoriser la transmission de l'image fournie par l'intensificateur de lumière ; ceci est intéressant car la luminance de cette image est faible puisqu'elle n'est généralement que de quelques candelas par mètre carré alors que celle de l'image fournie par le générateur peut être réglée au niveau désiré pour que les informations qu'elle contient soient visibles dans de bonnes conditions.

La mécanique, non représentée sur les figures 1 et 2, qu'implique l'utilisation de ce mélangeur escamotable augmente certes l'encombrement et le poids du dispositif, mais se justifie par sa simplicité technique : elle est analogue à celle des miroirs escamotables des appareils photographiques réflex.

Dans le cas de l'exemple décrit cette mécanique est entraînée manuellement ; c'est l'observateur qui met en place, lui-même, le miroir semi-réfléchissant au moment où il veut utiliser le dispositif en vision nocturne, et le retour en position diurne se fait de manière semi-automatique grâce à un ressort tendu lors de la mise en place du miroir.

Un entraînement motorisé du miroir 7 est également possible afin d'obtenir, dès la mise sous tension de l'intensificateur d'image ou par action de l'observateur, le basculement du miroir.

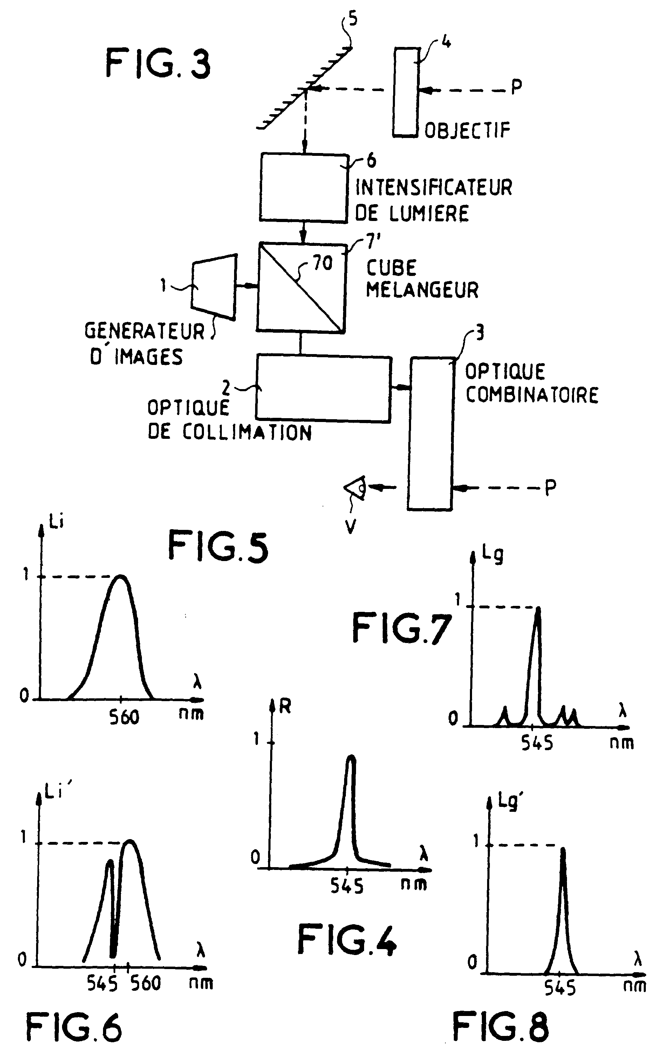

La figure 3 représente un autre dispositif, sortant du cadre de l'invention, qui se distingue du dispositif de l'invention selon les figures 1 et 2 par le fait que le rôle d'optique combinatoire que jouait le miroir 7 est maintenant joué par un cube mélangeur 7′. Le dispositif selon la figure 3 comporte les mêmes éléments 1 à 6 que le dispositif selon les figures 1 et 2 ; mais, à l'inverse du miroir 7, le cube mélangeur 7′ travaille en transmission pour la lumière provenant de l'intensificateur de lumière 6 et en réflexion pour la lumière provenant du générateur d'image 1, si bien que l'optique de collimation 2 se distingue de celle des figures 1 et 2 par son implantation dans le dispositif et par la position de son entrée relativement à sa sortie.

Le cube mélangeur 7′ est un cube dichroïque dans l'exemple décrit, c'est-à-dire qu'il est constitué de deux prismes accolés dont les faces en regard sont traitées pour constituer une surface, 70, réfléchissante autour d'une longueur d'onde donnée de la lumière, prise ici égale à 545 nanomètres ; un traitement holographique des faces en regard des prismes aurait permis d'obtenir le même résultat. La figure 4 montre comment varie le coefficient de réflexion R de la surface 70 en fonction de la longueur d'onde de la lumière ; la valeur du coefficient de transmission T de la surface 70 se déduit facilement de la courbe selon la figure 4 étant donné que R + T = 1.

Les luminophores utilisés dans l'intensificateur de lumière 6 sont, comme dans la majorité des amplificateurs de lumière actuels, des luminophores P20 dont la courbe de luminance en fonction de la longueur d'onde en nanomètres est représentée sur la figure 6 ; cette courbe représente la luminance, Li, avec des valeurs comprises entre 0 et 1, la valeur 1 étant atteinte pour la longueur d'onde de 560 manomètres qui correspond au maximum d'énergie transmise par le luminophore P20 ; la largeur de la bande spectrale du luminophore P20 est de 150 nanomètres pour la valeur 0,2 de la luminance.

Compte tenu des courbes selon les figures 4 et 5, la courbe de la luminance, Li′, correspondant à la lumière issue de l'intensificateur de lumière et qui arrive sur l'optique de collimation 2 après avoir traversé la surface 70 du cube 7', se présente, en fonction de la longueur d'onde, comme il est indiqué sur la figure 6 ; comme la bande spectrale du luminophore P20 est relativement large, la perte d'énergie qu'entraîne à 545 nanomètres !a traversée de la surface 70, est faible et sans effet notoire sur la qualité de l'image que délivre l'intensificateur de lumière 6.

Le générateur d'images 1 du dispositif selon la figure 3 utilise des luminophores P43 qui sont des luminophores à bande étroite centrée sur 545 nanomètres ; la courbe de la luminance Lg de ces luminophores en fonction de la longueur d'onde est représentée sur la figure 7.

Compte tenu des courbes selon les figures 4 et 6, la courbe de la luminance, Lg′, correspondant à la lumière issue du générateur d'images 1 et qui arrive sur l'optique de collimation 2 après réflexion sur la surface 70 du cube 7′, se présente, en fonction de la longueur d'onde, comme il est indiqué sur la figure 8, c'est-à-dire que la quasi-totalité de l'énergie lumineuse provenant du générateur d'images 1 est réfléchie vers l'optique de collimation 2.

Il est à noter que le dispositif selon la figure 3 fonctionne avec des sources de lumière à bande large dans la voie de l'intensificateur de lumière et à bande étroite dans la voie du générateur d'images ; il est également possible de le faire fonctionner avec des sources de lumière à bande étroite dans la voie de l'intensificateur de lumière et à bande large dans la voie du générateur d'image, ou à bandes étroites mais distinctes dans les deux voies ; il suffit de choisir le traitement de la surface 70 du cube 7 en fonction des bandes de fréquences à réfléchir et à transmettre.

La présente invention concerne tout particulièrement les visuels de casques utilisés par les pilotes d'avions et d'hélicoptères et comportant un dispositif selon l'invention définie dans la revendication 1.

## Revendications

1. Dispositif optique pour la vision diurne et nocturne présentant une première, une deuxième et une troisième voie optique destinées à aboutir toutes les trois à l'oeil d'un observateur (V), la première voie comportant en série une optique d'observation nocturne (4,5), un intensificateur de lumière (6), une optique combinatoire auxiliaire (7), une optique de collimation (2) pour fournir une image collimatée et une optique combinatoire principale (3), la deuxième voie comportant en série un générateur d'images (1), l'optique combinatoire auxiliaire (7), l'optique de collimation (2) et l'optique combinatoire principale (3), et la troisième voie comportant l'optique combinatoire principale (3) et étant destinée à permettre à un observateur de regarder directement ce qui se trouve dans son champ visuel (P), caractérisé en ce que l'optique combinatoire auxiliaire est constituée par un miroir escamotable (7) semi-réfléchissant traité pour présenter un coefficient de réflexion nettement supérieur à son coefficient de transmission, ce miroir escamotable, quand il n'est pas escamoté, travaillant en réflexion pour la première voie et en transmission pour la deuxième voie.

2. Casque de pilote, caractérisé en ce qu'il comporte au moins un dispositif selon la revendication 1.

## Patentansprüche

1. Optische Vorrichtung für die Sicht bei Tag und bei Nacht, die eine erste, eine zweite und eine dritte optische Strecke aufweist, die alle drei am Auge eines Beobachters (V) enden sollen, wobei die erste Strecke in Reihe eine Optik (4, 5) zur nächtlichen Beobachtung, einen Lichtverstärker (6), eine Hilfs-Kombinationsoptik (7), eine Kollimationsoptik (2) zur Lieferung eines kollimatierten Bilds und eine Haupt-Kombinationsoptik (3) enthält, während die zweite Strecke in Reihe einen Bildgenerator (1), die Hilfs-Kombinationsoptik (7), die Kollimationsoptik (2) und die Haupt-Kombinationsoptik (3) und die dritte Strecke die Haupt-Kombinationsoptik (3) aufweist, wobei die Vorrichtung es einem Beobachter erlauben soll, direkt zu sehen, was sich in seinem Sichtfeld (P) befindet, dadurch gekennzeichnet, daß die Hilfs-Kombinationsoptik aus einem halbreflektierenden Schwenkspiegel (7) besteht, der bearbeitet ist, um einen Reflexionskoeffizienten aufzuweisen, der wesentlich höher ist als sein Durchlaßkoeffizient, wobei dieser Schwenkspiegel, wenn er nicht weggeschwenkt ist, für die erste Strecke mit Reflexion und für die zweite Strecke in Durchlaßrichtung arbeitet.

2. Pilotenhelm, dadurch gekennzeichnet, daß er mindestens eine Vorrichtung gemäß Anspruch 1 aufweist.

## Claims

1. Optical device for daytime vision and night vision having a first, second and third optical channel, all three intended to reach the eye of an observer (V), the first channel including, in series, a night observation optical system (4, 5), a light intensifier (6), an auxiliary combining optical system (7), a collimating optical system (2) to provide a collimated image, and a main combining optical system (3), the second channel including, in series, an image generator (1), the auxiliary combining optical system (7), the collimating optical system (2) and the main combining optical system (3), and the third channel including the main combining optical system (3) and being intended to allow an observer to look directly at what is in his visual field (P), characterized in that the auxiliary combining optical system consists of a semi-reflecting retractable mirror (7) treated so as to have a reflection coefficient appreciably greater than its transmission coefficient, this retractable mirror, when it is not retracted, working in reflection in respect of the first channel and in transmission in respect of the second channel.

2. Pilot's helmet, characterized in that it includes at least one device according to Claim 1.
